# EUROPEAN PATENT SPECIFICATION

(11) **EP 4 628 550 B1**
(45) Date of publication and mention of the grant of the patent: **11.11.2026**
(21) Application number: 23897484.4
(22) Date of filing: 14.11.2023
(51) Int. Cl.: C09C 1/48, B60C 1/00, C01B 32/05, C08J 11/12, C08K 3/04, C08L 7/00

(54) **RECOVERED CARBON BLACK, RUBBER COMPOSITION, AND TIRE**
WIEDERGEWONNENER RUSS, KAUTSCHUKZUSAMMENSETZUNG UND REIFEN
NOIR DE CARBONE RÉCUPÉRÉ, COMPOSITION DE CAOUTCHOUC ET PNEUMATIQUE

(30) Priority: 30.11.2022 JP 2022192138
(43) Date of publication of application: 08.10.2025
(73) Proprietor: BRIDGESTONE CORPORATION, Chuo-ku Tokyo 104-8340 (JP)
(72) Inventor: OKINAGA Yuki, Tokyo 104-8340 (JP)
(74) Representative: Marks & Clerk LLP
(86) International application number: PCT/JP2023/040957
(87) International publication number: WO 2024/116833

(56) References cited:
- WO-A1-2015/011796
- WO-A1-2022/208924
- JP-A- 2017 008 223
- JP-A- 2022 146 475
- JP-A- 2022 158 415
- US-A1- 2014 339 478

## Description

### TECHNICAL FIELD

The present disclosure relates to recovered carbon black obtained by recovering from waste. The present disclosure also relates to a rubber composition using the recovered carbon black, and a tire obtained by using the rubber composition.

### BACKGROUND

In recent years, research on recycling and sustainable materials has been actively conducted to realize a sustainable society. Studies on recycling and the effective utilization of used tires are also underway. In particular, it is important to recover carbon black from used tires as a useful material. As a method for recovering carbon black from used tires, the thermal decomposition treatment described in PLTs 1 to 3 can be mentioned.

Incidentally, recovered carbon black recovered by recycling (hereinafter referred to as "recovered carbon black") contains, as impurities, metal components, inorganic components, organic components, etc. that were contained in the tire. When recovered carbon black is used in rubber production, it is known that due to the influence of impurities, various mechanical properties such as reinforcing characteristic and breaking resistance performance are reduced compared to carbon black that is not recycled (so-called "virgin" carbon black). Various investigations have been conducted to suppress the decrease in such physical properties.

For example, PLT 1 discloses a method for producing recovered carbon black capable of improving reinforcing characteristic when blended into a rubber composition, by uniformly and efficiently thermally decomposing polymer-based waste such as rubber materials.

PLT 2 discloses improvements in wear resistance and processability of a rubber composition by using recovered carbon black containing a zinc compound content of which is not greater than a given value.

Additionally, PLT 3 discloses the production of carbon black obtained from rubber decomposition oil generated by thermally decomposing rubber waste. It is disclosed that the carbon black of PLT 3 has an ash content of 0.1 to 10 mass%, and the breaking resistance performance of the rubber composition is improved by using such carbon black.

### CITATION LIST

### Patent Literature

PLT 1: JP 2012-162672 A
PLT 2: JP 2012-1682 A
PLT 3: JP 2017-8223 A

### SUMMARY

The present disclosure has been made in view of the above-described problem, and an object thereof is to provide a recovered carbon black that enables the production of rubber and a tire that has improved reinforcing characteristic while maintaining the breaking resistance.

Another object of the present disclosure is to provide a rubber composition containing the recovered carbon black, and a tire produced from the rubber composition.

To address the above problem, the present disclosure provides the following [1] to [5].
[1] Recovered carbon black having a particle size (D90) at which a cumulative volume percentage measured accordance with JIS K 6217-6:2008 reaches 90% of 310 nm or less, a nitrogen adsorption specific surface area of 50 m²/g or more and 85 m²/g or less, and a relative tinting strength measured in accordance with JIS K 6217-5 of 55 or more.
[2] The recovered carbon black according to [1], having a carbon content of 85 mass% or more and 97 mass% or less.
[3] The recovered carbon black according to [1] or [2], having an ash content of 0.5 mass% or more and 10 mass% or less.
[4] The recovered carbon black according to any one of [1] to [3], obtained from pyrolysis residue generated by thermally decomposing a rubber product containing carbon black.
[5] A rubber composition comprising the recovered carbon black according to any one of [1] to [4].
[6] A tire comprising the rubber composition according to [5].

### (Advantageous Effect)

According to the present disclosure, it is possible to obtain recovered carbon black that enables the production of a tire that has improved reinforcing characteristic while maintaining the breaking resistance. Furthermore, it is possible to obtain a tire that has improved reinforcing characteristic while maintaining the breaking resistance by using a rubber composition containing the recovered carbon black.

### DETAILED DESCRIPTION

### [Recovered carbon black]

The recovered carbon black of the present disclosure has a particle size (D90) at which the cumulative volume percentage measured accordance with JIS K 6217-6:2008 reaches 90% of 310 nm or less, a nitrogen adsorption specific surface area of 50 m²/g or more and 85 m²/g or less, and a relative tinting strength measured in accordance with JIS K 6217-5 of 55 or more. By using recovered carbon black having the above-described physical properties, it is possible to obtain a tire that has improved reinforcing characteristic while maintaining the breaking resistance.

In the present disclosure, "recovered carbon black" refers to carbon black obtained by recovering carbon black from waste materials subjected to recycling. The above-described waste subjected to recycling refers to rubber products, represented by used rubber and used tires, containing carbon black. "Recovered carbon black" differs from carbon black produced directly from hydrocarbons such as petroleum or natural gas, that is, carbon black that is not recycled. It should be noted that "used" in this context includes not only materials that were discarded after actual use, but also materials that were manufactured but discarded without actual use.

Additionally, the recovered carbon black of the present disclosure is recovered carbon black obtained from pyrolysis residue generated by thermally decomposing rubber products containing carbon black. When rubber products containing carbon black are thermally decomposed, pyrolysis residue and volatile components (oil) are generated, and recovered carbon black can be recovered from either of these. However, the recovered carbon black of the present disclosure does not include carbon black recovered from the oil.

The pyrolysis residue obtained by thermally decomposing waste such as used rubber and used tires contains ash in addition to carbon black. The ash originates from non-volatile components contained in the rubber and tires. Therefore, the recovered carbon black obtained from the pyrolysis residue has relatively lower carbon black content. On the other hand, in view of the various physical properties required for tires produced using recovered carbon black, the higher the carbon content, the more preferable. In the recovered carbon black of the present disclosure, the carbon content is preferably 85 mass% or more, more preferably 87 mass% or more, even more preferably 89 mass% or more, and further preferably 91 mass% or more. The upper limit of the carbon content in the recovered carbon black of the present disclosure is preferably 97 mass%. Accordingly, the recovered carbon black of the present disclosure has a carbon content of preferably 85 mass% or more and 97 mass% or less, more preferably 87 mass% or more and 97 mass% or less, even more preferably 89 mass% or more and 97 mass% or less, and further preferably 91 mass% or more and 97 mass% or less. It should be noted that the above carbon content is a value excluding adsorbed moisture.

Specifically, the ash contains zinc oxide, zinc sulfide, silica, iron compounds (iron oxides), calcium oxide, aluminum oxide, magnesium oxide, and the like. In the case of recovered carbon black produced from pyrolysis residue obtained by thermally decomposing waste, even when various processes to remove ash are performed, a certain amount of ash remains. In the present disclosure, the recovered carbon black can contain ash. The lower limit of the ash content in the recovered carbon black of the present disclosure may be 0.5 mass%. On the other hand, in view of the physical properties required for tires, the quality of the recovered carbon black, and the like, the ash content contained in the recovered carbon black is preferably 10 mass% or less, more preferably 6.5 mass% or less, and even more preferably 5.0 mass% or less. Accordingly, the ash content in the recovered carbon black of the present disclosure is preferably 0.5 mass% or more and 10 mass% or less, more preferably 0.5 mass% or more and 6.5 mass% or less, and even more preferably 0.5 mass% or more and 5.0 mass% or less.

The recovered carbon black recovered from the volatile components (oil) generated by thermal decomposition has a low ash content and a relatively high carbon content because the amount of impurities contained in the volatile components is small. Carbon black that is not recycled and is produced from hydrocarbons as raw materials (hereinafter, sometimes referred to as "ordinary carbon black") also has a high carbon content. The carbon content of these carbon blacks is about 98 mass% or more (excluding adsorbed moisture). Accordingly, the recovered carbon black of the present disclosure can be said to be different from ordinary carbon black and recovered carbon black produced by different production methods.

The recovered carbon black of the present disclosure is required to have a particle size (D90) at which the cumulative volume percentage measured in accordance with JIS K 6217-6:2008 (disc centrifuge sedimentation method) reaches 90% of 310 nm or less. If D90 is greater than 310 nm, it is not possible to obtain rubber with sufficient breaking resistance. D90 is preferably 305 nm or less, more preferably 295 nm or less, and even more preferably 200 nm or less.

Furthermore, the recovered carbon black of the present disclosure is required to have a nitrogen adsorption specific surface area (N₂SA) of 50 m²/g or more and 85 m²/g or less.

If the nitrogen adsorption specific surface area is less than 50 m²/g, it is not possible to obtain rubber with sufficient breaking resistance. In view of the breaking resistance, the nitrogen adsorption specific surface area is preferably 57 m²/g or more, more preferably 65 m²/g or more.

Generally, the nitrogen adsorption specific surface area tends to be increased as the particle size of carbon black is reduced. By using carbon black with a large nitrogen adsorption specific surface area, it becomes possible to obtain rubber excellent in breaking resistance. However, when the nitrogen adsorption specific surface area of the recovered carbon black is higher than 85 m²/g, the rolling resistance of the rubber tends to be reduced. The nitrogen adsorption specific surface area of the recovered carbon black is preferably 80 m²/g or less.

The nitrogen adsorption specific surface area of the recovered carbon black of the present disclosure is preferably 57 m²/g or more and 85 m²/g or less, more preferably 65 m²/g or more and 85 m²/g or less, and even more preferably 65 m²/g or more and 80 m²/g or less.

It should be noted that the nitrogen adsorption specific surface area (N₂SA) is a value measured in accordance with ISO 4652-1.

Furthermore, the recovered carbon black of the present disclosure is required to have a relative tinting strength measured in accordance with JIS K 6217-5 of 55 or more. The relative tinting strength is one of the parameters related to the particle size and specific surface area of the carbon black. When the relative tinting strength is less than 55, sufficient breaking resistance cannot be obtained. The relative tinting strength is preferably 60 or more, more preferably 65 or more, even more preferably 70 or more, and particularly preferably 80 or more.

### [Production Method of Recovered carbon black]

The recovered carbon black of the present disclosure is produced from pyrolysis residue generated by thermally decomposing rubber products containing carbon black.

The production method of the recovered carbon black of the present disclosure includes a step of thermally decomposing rubber products containing carbon black and a step of obtaining recovered carbon black from pyrolysis residue.

In the present disclosure, the rubber products containing carbon black as the raw materials are, for example, used tires. The used tires are preferably those collected from large vehicles such as trucks and buses, or from passenger vehicles.

The rubber products may be crushed in advance before the thermal decomposition step.

In the thermal decomposition step, thermal decomposition of the rubber products containing carbon black can be performed using known apparatus. For example, fuel, nitrogen, and the rubber products are introduced into a thermal decomposition furnace, and thermal decomposition is performed. As a result of this thermal decomposition step, pyrolysis residue and volatile components are generated from the rubber products.

After the thermal decomposition step, the pyrolysis residue and volatile components are separated by a known method. The volatile components become oil (decomposition oil) by cooling.

The pyrolysis residue after separation is collected, and impurities such as zinc oxide, silica, and iron compounds (iron oxides) are removed from the pyrolysis residue to recover recovered carbon black. A known method can be used as the method for removing impurities.

### [Rubber Composition]

The rubber composition of the present disclosure can be a rubber composition generally used for tire production, as long as it contains the above-described recovered carbon black. Each component will be described below.

### <Rubber Component>

In the rubber composition of the present disclosure, the type of rubber is not particularly limited. Examples include natural rubber (NR), polyisoprene rubber (IR), polybutadiene rubber (BR), styrene-butadiene copolymer rubber (SBR), butyl rubber (IIR), ethylene-propylene-diene copolymer (EPDM), acrylonitrile-butadiene copolymer (NBR), and rubbers obtained by combining these.

### <Filler>

The rubber composition of the present disclosure contains a filler for reinforcing the rubber composition.

In the present disclosure, the rubber composition contains the above-mentioned recovered carbon black. The compounding amount of the recovered carbon black in the rubber composition can be appropriately adjusted depending on the part of the tire to which the resulting rubber is applied. For example, the compounding amount of the recovered carbon black can be adjusted within the range of 1 to 150 parts by mass per 100 parts by mass of the rubber component.

By using the rubber composition containing the recovered carbon black of the present disclosure, the breaking resistance of the tire can be improved and the reinforcing characteristic can be improved.

In the present disclosure, the rubber composition can contain ordinary carbon black, in addition to the above-described recovered carbon black. When ordinary carbon black is used, the grade thereof is not particularly limited. From the viewpoint of promoting the use of recycled materials, it is preferable that the compounding amount of ordinary carbon black is as low as possible, and it is particularly preferable that ordinary carbon black is not included. Furthermore, it is preferable that the compounding amount of ordinary carbon black is less than the compounding amount of the recovered carbon black. However, depending on the specifications required for the rubber product, the compounding amount of ordinary carbon black may be higher than that of the recovered carbon black. The compounding amount of ordinary carbon black can be adjusted within the range of 0 to 150 parts by mass per 100 parts by mass of the rubber component, for example. In this case, the mass ratio of the ordinary carbon black to the recovered carbon black (ordinary carbon black/recovered carbon black) is preferably within the range of 95/5 to 0/100.

The rubber composition of the present disclosure may also include silica or an inorganic filler other than silica as a filler. The type of filler other than carbon black and the compounding amount of each filler can be appropriately selected depending on the part of the tire to which it is applied.

In the present disclosure, the type of silica is not particularly limited, and examples include wet silica (hydrated silica), dry silica (anhydrous silica), calcium silicate, aluminum silicate, and among these, wet silica is preferred. These types of silica may be used alone or in combination of two or more types.

Additionally, in the present disclosure, the physical properties of the silica used, such as BET specific surface area and cetyltrimethylammonium bromide specific surface area (CTAB), are not particularly limited and can be appropriately selected according to the performance of the tire obtained from the rubber composition.

In addition, the compounding amount of silica in the rubber composition is not particularly limited and can be appropriately selected according to the performance required for the tire.

In the present disclosure, the type of inorganic filler is not particularly limited, and for example, clay, talc, calcium carbonate, aluminum hydroxide, and the like can be used. These inorganic fillers can be appropriately selected in view of their various physical properties.

### <Various Components>

The rubber composition used in the present disclosure may contain, as needed, various components commonly used in the rubber industry, within a range that does not impair the effects of the present disclosure. Examples of such components include stearic acid, antioxidants, zinc oxide, vulcanizing agents, vulcanization accelerators, resins, oils, and silane coupling agents.

### [Tire]

The tire of the present disclosure is manufactured using the rubber composition containing the above-mentioned recovered carbon black. In particular, the rubber composition of the present disclosure is preferably applied to, but is not limited to, the tread, base, side, inner liner, bead, stiffener, and the like. By using the recovered carbon black of the present disclosure, the breaking resistance of the tire can be improved and the reinforcing characteristic can also be improved.

The compounds described in this specification other than the recovered carbon black may be partially or entirely derived from fossil resources, biological resources such as plant resources, or recycled resources such as used tires. Alternatively, they may be derived from a mixture of two or more of fossil resources, biological resources, and recycled resources.

### EXAMPLES

### [Production of Raw Material Rubber]

The ingredients were kneaded according to the formulation listed in Table 1 below to prepare rubber compositions. The kneading was performed in two stages. Table 1 summarizes the amount of each component blended at each kneading stage. The unit of numerical values in the formulations in Table 1 is parts by mass. The prepared rubber composition was vulcanized at 145°C to produce raw material rubber.

**[Table 1]**

| | | Raw material rubber A | Raw material rubber B |
|---|---|---|---|
| First stage of kneading | NR (parts by mass) | 100 | 100 |
| | CB1 (parts by mass) | 30 | 60 |
| | CB2 (parts by mass) | 15 | - |
| | CB3 (parts by mass) | 15 | - |
| | Stearic acid (parts by mass) | 2 | 2 |
| | Wax (parts by mass) | 1 | 1 |
| | Zinc oxide (parts by mass) | 1 | 1 |
| | Antioxidant 1 (parts by mass) | 1 | 1 |
| Second stage of kneading | Zinc oxide (parts by mass) | 2.5 | 2.5 |
| | Antioxidant 2 (parts by mass) | 0.3 | 0.3 |
| | Vulcanization accelerator 1 (parts by mass) | 1.4 | 1.4 |
| | Sulfur (parts by mass) | 1.16 | 1.16 |
| | Retarder (parts by mass) | 0.12 | 0.12 |

The details of the ingredients in Table 1 are as follows.
NR: Natural rubber, RSS #3
CB1: Carbon black, Seast 3 manufactured by Tokai Carbon Co., Ltd.
CB2: Carbon black, Seast F manufactured by Tokai Carbon Co., Ltd.
CB3: Carbon black, N660
Stearic acid: Kiri-jirushi Stearic Acid manufactured by NOF Corporation
Wax: Santite A manufactured by Seiko Chemical Co., Ltd.
Zinc Oxide: Two types of zinc oxide manufactured by HakusuiTec Co., Ltd.
Antioxidant 1: Antigen 6C manufactured by Sumitomo Chemical Co., Ltd.
Antioxidant 2: NONFLEX RD manufactured by Seiko Chemical Co., Ltd.
Vulcanization accelerator 1: Sanceler CM-G manufactured by Sanshin Chemical Industry Co., Ltd.
Sulfur: HK200-5 manufactured by Hosoi Chemical Industry Co., Ltd.
Retarder: Retarder CTP manufactured by Toray Fine Chemicals Co., Ltd.

### [Production of Recovered carbon black]

Recovered carbon blacks 2 to 7 were produced using raw material rubbers A and B through the following steps.

The raw material rubber A or the raw material rubber B was charged into a nitrogen-substituted metal container. Subsequently, the metal container was placed in an electric furnace heated to the temperature summarized in Table 2, and thermal decomposition was performed under a nitrogen gas stream. The oil generated by thermal decomposition during heating was collected with a trap, and heating was stopped when oil generation visually ceased. After the heating was stopped, the system was cooled to room temperature and the metal container was taken out from the electric furnace to stop the thermal heating. The residue inside the metal container was collected to obtain recovered carbon blacks 2 to 7.

As recovered carbon black 1, a commercially available recovered carbon black produced by thermal decomposition was prepared.

In Table 2, "recovered carbon black" is abbreviated as "r-CB".

### [Evaluations of Recovered carbon black]

### 1. Particle Size Distribution

Samples for measurement were taken from the recovered carbon black 1 to 7. The particle size distribution of each sample was measured in accordance with JIS K 6217-6:2008 (disc centrifuge sedimentation method). As the measuring device, the BI-DCP Particle Size Analyzer manufactured by Brookhaven Instruments was used. From the obtained particle size distribution, the particle size (D90) at which the cumulative volume percentage reached 90% was obtained. The results are summarized in Table 2. In Table 2, decimals were rounded off.

### 2. Nitrogen Adsorption Specific Surface Area

The nitrogen adsorption specific surface area of the recovered carbon black 1 to 7 was measured in accordance with ISO 4652-1. The results are summarized in Table 2. In Table 2, decimals were rounded off.

### 3. Relative Tinting Strength

The relative tinting strength of the recovered carbon black 1 to 7 was obtained by conducting measurements in accordance with JIS K 6217-5 and making adjustments using the calibration curve and correction factor. The results are summarized in Table 2. In Table 2, decimals were rounded off.

### 4. Carbon Content and Ash Content

The carbon content of the recovered carbon blacks 1 to 7 was measured by thermogravimetric analysis (TGA).

The sample was heated from room temperature to 550°C under a nitrogen atmosphere, and then heating was continued to maintain 550°C under an air atmosphere to measure weight loss. The weight loss (mass %) during heating from room temperature to 550°C under nitrogen atmosphere was defined as "weight loss 1", and the weight loss (mass %) during heating while maintaining 550°C under air atmosphere was defined as "weight loss 2". The weight loss 2 was regarded as the carbon content. The ash content was calculated by the following formula: $Ash content \left(mass %\right) = 100 - weight loss 1 - weight loss 2$

The results are summarized in Table 2. In Table 2, the carbon contents are expressed to the first decimal place. The ash contents are expressed with two significant figures.

**[Table 2]**

| | r-CB1 | r-CB2 | r-CB3 | r-CB4 | r-CB5 | r-CB6 | r-CB7 |
|---|---|---|---|---|---|---|---|
| Raw material rubber | - | A | A | A | A | B | B |
| Heating temperature (°C) | - | 450 | 500 | 550 | 600 | 500 | 550 |
| D90 (nm) | 382 | 303 | 289 | 292 | 302 | 147 | 145 |
| Nitrogen adsorption specific surface area (m²/g) | 68 | 47 | 60 | 58 | 56 | 74 | 73 |
| Relative tinting strength | 67 | 64 | 66 | 67 | 65 | 85 | 85 |
| Carbon content (mass%) | 76.1 | 86.1 | 90.6 | 90.6 | 90.5 | 89.5 | 89.8 |
| Ash content (mass%) | 20 | 7.7 | 7.9 | 8.3 | 9.7 | 7.2 | 7.2 |

As summarized in Table 2, the recovered carbon black 1 (r-CB1, commercially available recovered carbon black) had a large D90. Additionally, the ash content of the recovered carbon black 1 was greater than those of the recovered carbon blacks 2 to 7 (r-CB2 to 7).

The recovered carbon black 2 had a small nitrogen adsorption specific surface area. The recovered carbon black 3 to 7 met a D90 of 310 nm or less and a nitrogen adsorption specific surface area within the range of 50 m²/g or more and 85 m²/g or less, and also met a relative tinting strength of 55 or more.

### [Production of Rubber Using Recovered carbon black]

The ingredients were kneaded according to the formulation listed in Table 3 below to prepare rubber compositions. The kneading was performed in two stages. Table 3 summarizes the amount of each component blended at each kneading stage. The unit of numerical values in the formulations in Table 3 is parts by mass. The prepared rubber composition was vulcanized at 145°C to obtain the rubber of examples and comparative examples.

The details of the ingredients in Table 3 are as follows.
SBR: Styrene-butadiene rubber, SBR1500
r-CB1 to 7: Recovered carbon blacks 1 to 7 described above
Stearic acid: Kiri-jirushi Stearic Acid manufactured by NOF Corporation
Wax: Santite A manufactured by Seiko Chemical Co., Ltd.
Antioxidant 1: Antigen 6C manufactured by Sumitomo Chemical Co., Ltd.
Antioxidant 2: NONFLEX RD manufactured by Seiko Chemical Co., Ltd.
Zinc Oxide: Two types of zinc oxide manufactured by HakusuiTec Co., Ltd.
Vulcanization accelerator 2: Soxinol D manufactured by Sumitomo Chemical Co., Ltd.
Vulcanization accelerator 3: Sanceler NS-G manufactured by Sanshin Chemical Industry Co., Ltd.
Vulcanization accelerator 4: Sanceler DM-TG manufactured by Sanshin Chemical Industry Co., Ltd.
Sulfur: HK200-5 manufactured by Hosoi Chemical Industry Co., Ltd.

### [Performance Evaluations of Vulcanized Rubber]

### 1. Breaking Resistance

The tensile strength (TB) was measured by conducting a tensile test on the vulcanized rubber of each of the examples and comparative examples at room temperature in accordance with JIS K6251:2017. The breaking resistance was expressed as an index according to the following formula by taking the tensile strength of the test specimen of Comparative Example 1 as 100: 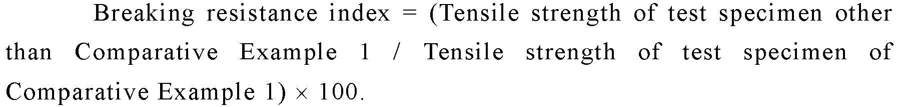 Breaking resistance index = (Tensile strength of test specimen other than Comparative Example 1 / Tensile strength of test specimen of Comparative Example 1) × 100.

A higher destruction resistance index indicates that the vulcanized rubber was more resistant to breakage and exhibited superior destruction resistance. The results are summarized in Table 3.

### 2. Reinforcing Characteristic

The tensile strength (TB) was measured by conducting a tensile test on the vulcanized rubber of each of the examples and comparative examples at room temperature in accordance with JIS K6251:2017. Using the tensile strength at 300% strain of the vulcanized rubber of each of the examples and comparative examples, the reinforcing characteristic was expressed using the following formula, based on Comparative Example 1: 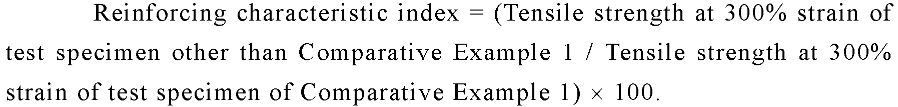 Reinforcing characteristic index = (Tensile strength at 300% strain of test specimen other than Comparative Example 1 / Tensile strength at 300% strain of test specimen of Comparative Example 1) × 100.

A higher reinforcing characteristic index indicates a better reinforcing characteristic. The results are summarized in Table 3.

**[Table 3]**

| | Formulation | Comp. Ex. 1 | Comp. Ex. 2 | Ex. 1 | Ex. 2 | Ex. 3 | Ex. 4 | Ex. 5 |
|---|---|---|---|---|---|---|---|---|
| First stage of kneading | SBR (parts by mass) | 100 | 100 | 100 | 100 | 100 | 100 | 100 |
| | r-CB1 (parts by mass) | 50 | - | - | - | - | - | - |
| | r-CB2 (parts by mass) | - | 50 | - | - | - | - | - |
| | r-CB3 (parts by mass) | - | - | 50 | - | - | - | - |
| | r-CB4 (parts by mass) | - | - | - | 50 | - | - | - |
| | r-CB5 (parts by mass) | - | - | - | - | 50 | - | - |
| | r-CB6 (parts by mass) | - | - | - | - | - | 50 | - |
| | r-CB7 (parts by mass) | - | - | - | - | - | - | 50 |
| | Stearic acid (parts by mass) | 2 | 2 | 2 | 2 | 2 | 2 | 2 |
| | Antioxidant 1 (parts by mass) | 1 | 1 | 1 | 1 | 1 | 1 | 1 |
| | Antioxidant 2 (parts by mass) | 1 | 1 | 1 | 1 | 1 | 1 | 1 |
| Second stage of kneading | Zinc oxide (parts by mass) | 3 | 3 | 3 | 3 | 3 | 3 | 3 |
| | Vulcanization accelerator 2 (parts by mass) | 0.6 | 0.6 | 0.6 | 0.6 | 0.6 | 0.6 | 0.6 |
| | Vulcanization accelerator 3 (parts by mass) | 0.6 | 0.6 | 0.6 | 0.6 | 0.6 | 0.6 | 0.6 |
| | Vulcanization accelerator 4 (parts by mass) | 0.6 | 0.6 | 0.6 | 0.6 | 0.6 | 0.6 | 0.6 |
| | Sulfur (parts by mass) | 1.5 | 1.5 | 1.5 | 1.5 | 1.5 | 1.5 | 1.5 |
| Evaluation results | Breaking Resistance (Index) | 100 | 100 | 104 | 104 | 103 | 120 | 101 |
| | Reinforcing characteristic (Index) | 100 | 121 | 162 | 173 | 188 | 203 | 212 |

When the breaking resistance was 100 or more and the reinforcing characteristic was 160 or more, the sample was judged as "Pass".

As summarized in Table 3, Examples 1 to 5 using the recovered carbon black (recovered carbon black 3 to 7) satisfying a D90 of 310 nm or less, a nitrogen adsorption specific surface area of 50 m²/g or more and 85 m²/g or less, and a relative tinting strength of 55 or more met a breaking resistance index of 100 or more and a reinforcing characteristic of 160 or more. In other words, it can be understood that Examples 1 to 5 had a breaking resistance equal to or higher than that of Comparative Example 1 while having greatly improved reinforcing characteristic.

On the other hand, in Comparative Example 2 using the recovered carbon black 2 having a small nitrogen adsorption specific surface area, the reinforcing characteristic could not be sufficiently improved.

## Claims

1. Recovered carbon black having
a particle size (D90) at which a cumulative volume percentage measured in accordance with JIS K 6217-6:2008 reaches 90% of 310 nm or less,
a nitrogen adsorption specific surface area of 50 m²/g or more and 85 m²/g or less as measured in accordance with ISO 4652-1, and
a relative tinting strength measured in accordance with JIS K 6217-5 of 55 or more.

2. The recovered carbon black according to claim 1, having a carbon content of 85 mass% or more and 97 mass% or less, as measured by thermogravimetric analysis according to the description.

3. The recovered carbon black according to claim 1 or claim 2, having an ash content of 0.5 mass% or more and 10 mass% or less, as measured according to the method of the description.

4. The recovered carbon black according to claim 1 or claim 2, obtained from pyrolysis residue generated by thermally decomposing a rubber product containing carbon black.

5. A rubber composition comprising the recovered carbon black according to claim 1 or claim 2.

6. A tire comprising the rubber composition according to claim 5.

## Patentansprüche

1. Zurückgewonnener Ruß, der folgendes aufweist
eine Partikelgröße (D90), bei der ein kumulativer Volumenprozentsatz, gemessen gemäß JIS K 6217-6:2008 90 % von 310 nm oder weniger erreicht,
eine stickstoffadsorptionsspezifische Oberfläche von 50 m²/g oder mehr und 85 ²/g oder weniger, gemessen nach ISO 4652-1, und
eine relative Farbstärke, gemessen nach JIS K 6217-5, von 55 oder mehr.

2. Zurückgewonnener Ruß nach Anspruch 1, der einen Kohlenstoffgehalt von 85 Masse-% oder mehr und 97 Masse-% oder weniger aufweist, gemessen durch thermogravimetrische Analyse gemäß der Beschreibung.

3. Zurückgewonnener Ruß nach Anspruch 1 oder Anspruch 2, der einen Aschegehalt von 0,5 Masse-% oder mehr und 10 Masse-% oder weniger aufweist, gemessen nach dem Verfahren der Beschreibung.

4. Zurückgewonnener Ruß nach Anspruch 1 oder Anspruch 2, der aus Pyrolyserückständen erhalten wird, die bei thermischer Zersetzung eines rußhaltigen Gummiprodukts erzeugt wurden.

5. Kautschukzusammensetzung, die den zurückgewonnenen Ruß nach Anspruch 1 oder Anspruch 2 umfasst.

6. Reifen, der die Kautschukzusammensetzung nach Anspruch 5 umfasst.

## Revendications

1. Noir de carbone récupéré présentant
une taille de particule (D90) à laquelle un pourcentage volumique cumulé mesuré conformément à JIS K 6217-6:2008 atteint 90 % de 310 nm ou moins,
une superficie spécifique d'adsorption d'azote de 50 m²/g ou plus et 85 m²/g ou moins, telle que mesurée conformément à ISO 4652-1, et
une force de coloration relative de 55 ou plus mesurée conformément à JIS K 6217-5.

2. Noir de carbone récupéré selon la revendication 1, présentant une teneur en carbone de 85 % en masse ou plus et de 97 % en masse ou moins, telle que mesurée par analyse thermogravimétrique selon la description.

3. Noir de carbone récupéré selon la revendication 1 ou la revendication 2, présentant une teneur en cendres de 0,5 % en masse ou plus et de 10 % en masse ou moins, telle que mesurée selon le procédé de la description.

4. Noir de carbone récupéré selon la revendication 1 ou la revendication 2, obtenu à partir de résidu de pyrolyse généré par décomposition thermique d'un produit en caoutchouc contenant du noir de carbone.

5. Composition de caoutchouc comprenant le noir de carbone récupéré selon la revendication 1 ou la revendication 2.

6. Pneu comprenant la composition de caoutchouc selon la revendication 5.
